# EUROPEAN PATENT APPLICATION

(11) **EP 4 753 035 A1**
(43) Date of publication of application: **03.06.2026**
(21) Application number: 24845504.0
(22) Date of filing: 17.07.2024
(51) Int. Cl.: H01M 50/129, H01G 11/78, H01M 50/105, H01M 50/121, H01M 50/131

(54) **OUTER COVERING MATERIAL FOR POWER STORAGE DEVICE, AND POWER STORAGE DEVICE USING SAME**

(30) Priority: 24.07.2023 JP 2023119634
(71) Applicant: Toppan Holdings Inc., Tokyo 110-0016 (JP)
(72) Inventor: SASAKI, Satoshi, Tokyo 110-0016 (JP); MURAKI, Takuya, Tokyo 110-0016 (JP)
(74) Representative: Hoffmann Eitle
(86) International application number: PCT/JP2024/025683
(87) International publication number: WO 2025/023125

(57) **Abstract**

An outer covering material for a power storage device includes a base material layer, a barrier layer including a metal foil layer, and a thermally fusible resin layer in this order. The outer covering material for a power storage device comprises a lubricant layer containing a lubricant on a surface of the thermally fusible resin layer. If the outer covering material for a power storage device is placed in an environment at 40°C or higher, the thermally fusible resin layer absorbs the lubricant from the lubricant layer such that an amount of lubricant in the lubricant layer becomes 10 mg/m² or less.

## Description

### [Technical Field]

The present disclosure relates to an outer covering material for a power storage device, and a power storage device using the same.

### [Background Art]

As power storage devices, for example, secondary batteries such as lithium-ion batteries, nickel-metal hydride batteries, and lead-acid batteries, as well as electrochemical capacitors such as electric double-layer capacitors, are known. Further reduction in the size of power storage devices is sought due to the reduction in size of portable devices, limitations in installation spaces, and the like, and lithium-ion batteries having high energy density are receiving attention. As an outer covering material used for lithium-ion batteries, metal cans have been conventionally used, but multilayer films, which are lightweight, have high heat dissipation, and can be produced at a low cost, have come into use.

A lithium-ion battery that uses the multilayer film mentioned above as an outer covering material is referred to as a laminate-type lithium-ion battery. The outer covering material covers a battery cell having a positive electrode, a separator, a negative electrode, an electrolytic solution, and the like, and prevents moisture from entering the interior. A laminate-type lithium-ion battery is manufactured, for example, by forming a recess portion in a portion of the outer covering material by cold forming, accommodating the battery cell in the recess portion, and then folding over the remaining part of the outer covering material and sealing the edge parts by heat sealing (for example, see PTL 1).

### [Citation List]

### [Patent Literature]

PTL 1: JP 2013-101765 A

### [Summary of the Invention]

### [Technical Problem]

In addition, as the next-generation of lithium-ion batteries, research and development is being performed on power storage devices referred to as all-solid-state batteries. An all-solid-state battery has the characteristic of not using an organic electrolytic solution as an electrolyte, and uses a solid electrolyte. In contrast to lithium-ion batteries, which cannot be used under temperature conditions higher than the boiling point of the electrolytic solution (about 80°C), all-solid-state batteries can be used under temperature conditions exceeding 100°C, and by operating an all-solid-state battery under high temperature conditions (for example, 100 to 150°C), the conductivity of lithium ions can be increased. Furthermore, when using an all-solid-state battery, the space and cost required for a cooling system to cool the battery can be reduced.

However, in the multilayer film as described above, cracks and ruptures are sometimes observed when forming the recess portion by cold forming, and there is still room for improvement in terms of formability.

Moreover, the multilayer film as described above is sometimes used as an outer covering container of an all-solid-state battery, and in such a case, the battery cell is accommodated inside the outer covering container, and the battery cell is held in a pressurized state via the multilayer film in some cases. However, an all-solid-state battery tends to reach high temperatures at 40°C or higher during operation, and if the all-solid-state battery is subjected to vibration or the like at that time, the battery cell inside the outer covering container can sometimes slip with respect to the multilayer film. Therefore, in terms of the outer covering material of an all-solid-state battery, it is required that slippage with respect to the battery cell does not easily occur even when placed in a high-temperature environment at 40°C or higher while the battery cell is in a pressurized state.

Also, in not only all-solid-state batteries, but also in other power storage devices such as lithium-ion capacitors, power storage devices that can be used at high temperatures are being developed. Therefore, in terms of the outer covering materials of other power storage devices such as lithium-ion capacitors, it is required that slippage with respect to the battery cell does not easily occur even when placed in a high-temperature environment at 40°C or higher while the battery cell is in a pressurized state.

The present disclosure has been made in view of the above problems, and an object thereof is to provide an outer covering material for a power storage device that has excellent formability, and can suppress slippage with respect to a battery cell of the power storage device even when placed in an environment at 40°C or higher in a state where the battery cell is pressurized, and a power storage device using the same.

### [Solution to Problem]

In order to solve the problems above, an aspect of the present disclosure provides an outer covering material for a power storage device comprising a base material layer, a barrier layer including a metal foil layer, and a thermally fusible resin layer in this order, wherein a surface of the thermally fusible resin layer is provided with a lubricant layer containing a lubricant, and in a case where the outer covering material for a power storage device is placed in an environment at 40°C or higher, the thermally fusible resin layer absorbs the lubricant from the lubricant layer such that an amount of lubricant in the lubricant layer becomes 10 mg/m² or less.

The outer covering material for a power storage device described above comprises a lubricant layer containing a lubricant on a surface of the thermally fusible resin layer. For this reason, when a recess portion is formed in the outer covering material using a mold from the lubricant layer side, the mold slides easily with respect to the lubricant layer, the static friction coefficient that the mold imparts to the outer covering material is reduced, and ruptures and cracks are less likely to occur in the outer covering material. Therefore, the outer covering material for a power storage device has excellent formability. Furthermore, after the forming process is completed with respect to the outer covering material for a power storage device, and the outer covering material for a power storage device is placed in an environment at 40°C or higher, the thermally fusible resin layer absorbs the lubricant from the lubricant layer such that the amount of lubricant in the lubricant layer becomes 10 mg/m² or less. For this reason, for example, after placing the outer covering material in an environment at 40°C or higher, when a battery cell of a power storage device is placed between two outer covering materials with the lubricant layer facing the battery cell side, and the battery cell is pressurized via the outer covering materials, because the lubricant contained in the lubricant layer has already been absorbed into the thermally fusible resin layer, and the amount of lubricant in the lubricant layer becomes 10 mg/m² or less, the static friction coefficient of the outer covering material with respect to the battery cell increases, and slippage of the outer covering material with respect to the battery cell can be suppressed.

In the outer covering material for a power storage device described above, it is preferable that the thermally fusible resin layer includes a sealant layer, and a content of a lubricant in the sealant layer is less than 200 ppm by mass.

In this case, when the outer covering material for a power storage device is placed in an environment at 40°C or higher, the sealant layer can effectively absorb the lubricant from the lubricant layer. For this reason, for example, after placing the outer covering material in an environment at 40°C or higher, when a battery cell of a power storage device is placed between two outer covering materials with the lubricant layer facing the battery cell side, and the battery cell is pressurized via the outer covering materials, the static friction coefficient of the outer covering material with respect to the battery cell becomes even larger, and slippage of the outer covering material with respect to the battery cell can be more sufficiently suppressed.

In the outer covering material for a power storage device described above, it is preferable that the thermally fusible resin layer includes a sealant layer, and the sealant layer contains a polyolefin resin.

In this case, because the heat sealing properties of the sealant layer of the thermally fusible resin layer are improved, and the moisture permeability is more easily reduced, it is possible for the outer covering material to have enhanced heat sealing properties and barrier properties.

In the outer covering material for a power storage device described above, the lubricant contained in the lubricant layer may be a fatty acid amide.

In the outer covering material for a power storage device described above, the lubricant layer is preferably obtained by coating using a composition containing the lubricant.

Because the lubricant layer is obtained by coating using a composition containing the lubricant, it is easy to control the amount of lubricant in the lubricant layer. For this reason, it becomes easier to adjust the amount of lubricant in the lubricant layer to a constant amount greater than 10 mg/m² at which excellent formability is exhibited, and the formability is stabilized. In addition, because the lubricant layer is obtained by coating using a composition containing the lubricant, it is possible to make the amount of lubricant in the lubricant layer less than or equal to the amount of lubricant that can be absorbed into the thermally fusible resin layer.

In the outer covering material for a power storage device described above, a surface roughness Sa of a surface of the thermally fusible resin layer on the lubricant layer side is preferably 1.0 µm or less.

The surface roughness Sa of the surface of the thermally fusible resin layer on the lubricant layer side also affects the ease of sliding of the mold. When the surface roughness Sa of the surface of the thermally fusible resin layer on the lubricant layer side is 1.0 µm or less, after the lubricant contained in the lubricant layer is absorbed into the thermally fusible resin layer, because the contact area between the outer covering material and the battery cell can be increased, it is possible to make the outer covering material less likely to slip with respect to the battery cell.

The outer covering material for a power storage device described above may further include an adhesive layer between the base material layer and the barrier layer.

In the outer covering material for a power storage device described above, a static friction coefficient of a surface the lubricant layer of the outer covering material at 60°C is preferably 0.75 or more.

In this case, when a battery cell of a power storage device is placed between two outer covering materials with the lubricant layer facing the battery cell side, and the battery cell is pressurized via the outer covering materials, even when the power storage device is operated and the battery cell generates heat at 60°C or higher, the static friction coefficient of the outer covering material with respect to the battery cell becomes even larger, and slippage of the outer covering material with respect to the battery cell can be more sufficiently suppressed. For this reason, particularly when the battery cell becomes large and the weight of the battery cell itself increases, positional displacement of the battery cell with respect to the outer covering material can be made less likely to occur.

In the outer covering material for a power storage device described above, a static friction coefficient of a surface of the lubricant layer of the outer covering material at 23°C is preferably 0.4 or less.

In this case, as a result of the static friction coefficient of a surface of the lubricant layer of the outer covering material at 23°C being 0.4 or less, when a recess portion is formed in the outer covering material using a mold from the lubricant layer side, the mold slides easily with respect to the lubricant layer, the static friction coefficient that the mold imparts to the outer covering material is reduced, and ruptures and cracks are less likely to occur in the outer covering material. Therefore, the outer covering material for a power storage device has even better formability.

In the outer covering material for a power storage device described above, the power storage device may be an all-solid-state battery.

Furthermore, another aspect of the present disclosure provides a power storage device, comprising: a battery cell; and an outer covering container that accommodates the battery cell, wherein the outer covering container is obtained using the outer covering material for a power storage device described above.

According to such a power storage device, because the outer covering material has excellent formability, ruptures, cracks, and the like are less likely to occur in the outer covering material. For this reason, the entry of moisture into the outer covering container can be suppressed. Also, even if the battery cell generates heat during operation of the power storage device and the outer covering material becomes a high temperature state at 40°C or higher, because the lubricant contained in the lubricant layer is absorbed into the thermally fusible resin layer, and the amount of lubricant in the lubricant layer becomes 10 mg/m² or less, the static friction coefficient of the outer covering material with respect to the battery cell increases, and slippage of the outer covering material with respect to the battery cell can be suppressed.

The power storage device described above may be an all-solid-state battery.

### [Advantageous Effects of the Invention]

According to the present disclosure, it is possible to provide an outer covering material for a power storage device that has excellent formability, and can suppress slippage with respect to a battery cell of the power storage device even when placed in an environment at 40°C or higher in a state where the battery cell is pressurized, and a power storage device using the same.

### [Brief Description of the Drawings]

Fig. 1 is a schematic cross-sectional view of an outer covering material for a power storage device according to an embodiment of the present disclosure.
Fig. 2 is a schematic cross-sectional view of an outer covering material for a power storage device according to an embodiment of the present disclosure.
Fig. 3 is a perspective view of a power storage device according to an embodiment of the present disclosure.
Fig. 4 is a plan view of a formed body used in the Examples and Comparative Examples.

### [Description of the Embodiments]

Hereinafter, preferred embodiments of the present disclosure will be described in detail with appropriate reference to the drawings. Note that, in the drawings, the same or corresponding parts are denoted by the same reference signs, and duplicated descriptions are omitted. Furthermore, the dimensional ratios in the drawings are not limited to those shown in the drawings.

### [Outer Covering Material for Power Storage Device]

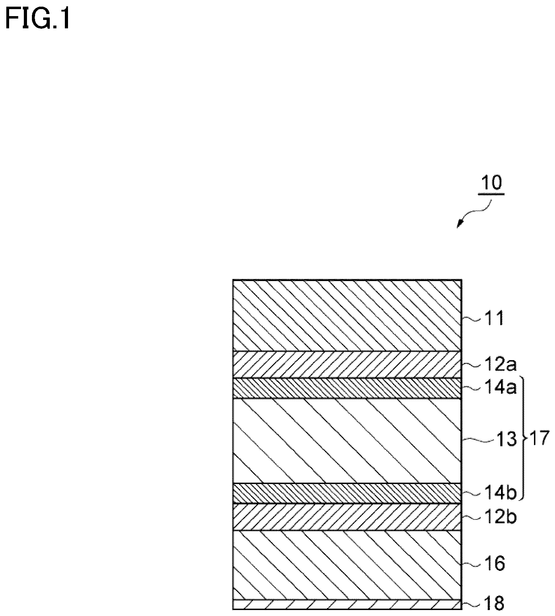

Fig. 1 is a cross-sectional view schematically showing an embodiment of an outer covering material for a power storage device of the present disclosure. As shown in Fig. 1, an outer covering material (outer covering material for a power storage device) 10 of the present embodiment is a laminated body including a base material layer 11, an outer adhesive layer 12a, a barrier layer 17 including a metal foil layer 13, an inner adhesive layer 12b, a sealant layer 16 serving as a thermally fusible resin layer, and a lubricant layer 18 containing a lubricant, in this order.

The barrier layer 17 may further have a first anti-corrosion treatment layer 14a and a second anti-corrosion treatment layer 14b on the two surfaces of the metal foil layer 13, respectively. The first anti-corrosion treatment layer 14a is provided on the surface of the metal foil layer 13 on the base material layer 11 side, and the second anti-corrosion treatment layer 14b is provided on the surface of the metal foil layer 13 on the sealant layer 16 side, respectively. Note that, in the barrier layer 17, only one of the first anti-corrosion treatment layer 14a and the second anti-corrosion treatment layer 14b may be provided, or no anti-corrosion treatment layer may be provided.

The sealant layer 16 is capable of absorbing the lubricant from the lubricant layer 18 when the outer covering material 10 is placed in an environment at 40°C or higher, such that the amount of lubricant in the lubricant layer 18 becomes 10 mg/m² or less.

Hereinafter, each layer constituting the outer covering material 10 will be described in more detail.

### <Base Material Layer>

The base material layer 11 plays the role of imparting heat resistance during the sealing process when the power storage device is manufactured, and suppressing the occurrence of pinholes that may occur during forming or distribution. Particularly in the case of an outer covering material for a large power storage device or the like, it is also possible to impart scratch resistance, chemical resistance, insulation properties, and the like.

The base material layer 11 is preferably a resin film formed from a resin having insulating properties. As the resin, polyester resin, polyamide resin, polyimide resin, polyamide-imide resin, polyether ketone resin, polyphenylene sulfide resin, polyetherimide resin, polysulfone resin, fluororesin, phenol resin, melamine resin, urethane resin, allyl resin, silicone resin, epoxy resin, furan resin, acetyl cellulose resin, and the like can be used.

Among such resins, as the base material layer 11, polyester resins and polyamide resins are preferable from the viewpoint of excellent formability. Examples of polyester resins include polyethylene terephthalate, polybutylene terephthalate, and polyethylene naphthalate. Examples of polyamide resins include Nylon-6, Nylon-6,6, copolymers of Nylon-6 and Nylon-6,6, Nylon-6, Nylon-9T, Nylon-10, poly(metaxylene adipamide) (MXD6), Nylon-11, and Nylon-12.

Among such polyester resins and polyamide resins, it is preferable to use a polyester resin as the base material layer 11. Polyester resins have excellent heat resistance, chemical resistance, and formability. For this reason, even when sealing is performed to form an outer covering container using the outer covering material 10, the base material layer 11 is less likely to melt. In addition, the base material layer 11 is less likely to yellow even when the outer covering material 10 is used in a high-temperature environment (for example, 120°C). Also, the base material layer 11 is less likely to become dissolved even upon coming into contact with chemicals, and the base material layer 11 is less likely to be ruptured when formed into the outer covering material 10.

The base material layer 11 may be either a stretched or unstretched film, or a coating film. The base material layer 11 may be single-layered or multi-layered, and in the case of a multi-layered structure, layers made of different resins can be used in combination. When the base material layer 11 is a film, a film obtained by co-extruding a plurality of resin layers or a film obtained by laminating a plurality of resin layers via an adhesive can be used as the base material layer 11. When the base material layer 11 has a coating film, a film obtained by performing coating with a certain number of layers, or a laminated body combining a film and a coating film can also be used as the base material layer 11.

When the base material layer 11 is a stretched film, the base material layer 11 may be a uniaxially stretched film or a biaxially stretched film, but is preferably a biaxially stretched film. In this case, because the base material layer 11 has high strength in two orthogonal directions, the base material layer 11 is less likely to be ruptured even when the outer covering material 10 is formed. That is, the outer covering material 10 has excellent formability.

Examples of the stretching method of a biaxially stretched film include sequential biaxial stretching, tubular biaxial stretching, and simultaneous biaxial stretching. The biaxially stretched film is preferably stretched by tubular biaxial stretching from the viewpoint of obtaining even better deep drawing formability.

The base material layer 11 may be a single-layer film composed of one type of resin film, or may be a laminated film composed of two or more types of resin films.

The thickness of the base material layer 11 is preferably 6 to 50 µm, and more preferably 10 to 30 µm. When the thickness of the base material layer 11 is 6 µm or more, the pinhole resistance and insulation properties of the outer covering material 10 tend to be improved. When the thickness of the base material layer 11 is 50 µm or less, the total thickness of the outer covering material 10 can be reduced.

The melting point of the base material layer 11 is not particularly limited, but is preferably higher than the melting point of the sealant layer 16 in order to suppress deformation of the base material layer 11 during sealing. In addition, the melting point of the base material layer 11 is more preferably at least 30°C higher than the melting point of the sealant layer 16.

### <Outer Adhesive Layer>

The outer adhesive layer 12a is a layer that adheres the base material layer 11 and the barrier layer 17. Specific examples of the material constituting the outer adhesive layer 12a include polyurethane resins obtained by reacting a main agent such as a polyester polyol, a polyether polyol, an acrylic polyol, or a carbonate polyol with a curing agent such as a bifunctional or higher isocyanate compound (polyfunctional isocyanate compound). Furthermore, among polyurethane resins, a polyester urethane resin obtained using a polyester polyol and a bifunctional or higher isocyanate compound is preferable, because the occurrence of separation of the outer layer (base material layer 11) in a high-temperature environment is more easily suppressed.

The various polyols described above can be used alone or in combination of two or more, depending on the functions and performance required of the outer covering material 10.

Moreover, various other additives and stabilizers may be blended with the polyurethane resin described above, depending on the performance required of the adhesive.

In the polyurethane-based adhesive used to form the outer adhesive layer 12a containing the polyurethane resin described above, the ratio of the number of isocyanate groups contained in the polyfunctional isocyanate compound to the number of hydroxyl groups contained in the polyol (NCO/OH) may be 2 to 60, preferably 5 to 50, or more preferably 10 to 40. When the ratio is 2 or more, the adhesive strength between the base material layer 11 and the metal foil layer 13 in a high-temperature environment (for example, 150°C) can be further improved, and separation of the base material layer 11 from the metal foil layer 13 in a high-temperature environment is more easily suppressed. When the ratio is 60 or less, the remaining amount of unreacted hydroxyl groups can be prevented from being excessive, and the adhesive strength between the base material layer 11 and the barrier layer 17 in both a room temperature environment and a high-temperature environment is more easily improved. The heat resistance of the cured product of the polyurethane-based adhesive (outer adhesive layer 12a) is improved by units such as urea and biuret that are generated by the reaction of a trace amount of water contained in the atmosphere or the adhesive with the polyfunctional isocyanate compound. For this reason, the more the amount of the polyfunctional isocyanate compound increases, the more the amount of such units increases, which tends to increase Tg and improve heat resistance. Among polyfunctional isocyanate compounds, aliphatic (alicyclic) polyfunctional isocyanate compounds in particular have excellent heat resistance, and can further improve the adhesion between the base material layer 11 and the barrier layer 17 in a high-temperature environment.

The thickness of the outer adhesive layer 12a is not particularly limited, but from the viewpoint of obtaining the desired adhesive strength, conformability, processability, and the like, the thickness is, for example, preferably 1 to 10 µm, and more preferably 3 to 7 µm. Note that, when the thickness of the outer adhesive layer 12a is 1 µm or more, high adhesive strength is more easily obtained, and stress relaxation of the shearing force generated during thermal expansion of the base material layer 11 and the metal foil layer 13 more easily occurs in a high-temperature environment. On the other hand, when the thickness of the outer adhesive layer 12a is 10 µm or less, the formability of the outer covering material 10 can be further improved, and the occurrence of separation of the outer layer (base material layer 11) in a high-temperature environment is more easily suppressed.

### <Barrier Layer>

The metal foil layer 13 included in the barrier layer 17 has water vapor barrier properties that prevent moisture from entering the interior of the power storage device. In addition, the metal foil layer 13 may have extensibility for deep drawing. As the metal foil layer 13, for example, various metal foils such as aluminum, stainless steel, and copper can be used. The metal foil layer 13 does not undergo significant softening at 120°C, and has a large elongation suppression effect in a high-temperature environment. Among such metal foils, aluminum foil is more preferable. Aluminum foil has high barrier properties, good formability and flexibility, and is lightweight. As a result, the barrier properties of the outer covering material 10 can be improved. In addition, even when the outer covering material 10 is formed, the metal foil layer 13 is less likely to be ruptured, and a decrease in the barrier properties of the outer covering material 10 can be suppressed. Also, because the flexibility of the outer covering material 10 is improved, the outer covering material 10 can conform to the shape of the battery cell even when the battery cell is accommodated in an outer covering container formed using the outer covering material 10. Further, because the outer covering material 10 becomes lightweight, the volumetric energy density of the power storage device having the outer covering material 10 can also be increased. Moreover, because an aluminum foil does not need to have the thickness reduced to improve conformability to the shape of the battery cell, it is possible to suppress a decrease in the remaining thickness of the metal foil layer 13 after deep drawing of the outer covering material 10.

As the aluminum foil, a soft aluminum foil that has been subjected to an annealing treatment can be preferably used from the viewpoint of imparting the desired extensibility during forming, but it is more preferable to use an aluminum foil containing iron for the purpose of imparting further pinhole resistance and extensibility during forming. The iron content in the aluminum foil is preferably 0.1 to 9.0% by mass, and more preferably 0.5 to 2.0% by mass, relative to 100% by mass of the aluminum foil. When the content of iron is 0.1% by mass or more, an outer covering material 10 having even better pinhole resistance and extensibility can be obtained. When the content of iron is 9.0% by mass or less, an outer covering material 10 having even better flexibility can be obtained. As the aluminum foil, an untreated aluminum foil may be used, but it is preferable to use an aluminum foil that has been subjected to a degreasing treatment from the viewpoint of imparting corrosion resistance. When the aluminum foil is subjected to a degreasing treatment, only one side of the aluminum foil may be subjected to the degreasing treatment, or both sides may be subjected to the degreasing treatment.

The thickness of the metal foil layer 13 is not particularly limited, but in consideration of the barrier properties, pinhole resistance, and processability, the thickness is preferably 9 to 200 µm, and more preferably 15 to 100 µm.

### <First Anti-Corrosion Treatment Layer and Second Anti-Corrosion Treatment Layer>

The first anti-corrosion treatment layer 14a and the second anti-corrosion treatment layer 14b are layers provided to prevent corrosion of the metal foil (metal foil layer) or the like constituting the metal foil layer 13. Furthermore, the first anti-corrosion treatment layer 14a plays the role of enhancing the adhesive force between the metal foil layer 13 and the outer adhesive layer 12a. Moreover, the second anti-corrosion treatment layer 14b plays the role of enhancing the adhesive force between the metal foil layer 13 and the inner adhesive layer 12b. The first anti-corrosion treatment layer 14a and the second anti-corrosion treatment layer 14b may be layers having the same configuration or layers having different configurations. The first and second anti-corrosion treatment layers 14a and 14b (hereinafter also simply referred to as "anti-corrosion treatment layers 14a and 14b") may be formed by, for example, a degreasing treatment, a hot water modification treatment, an anodizing treatment, a chemical conversion treatment, or a combination of such treatments.

Examples of degreasing treatment include acid degreasing and alkali degreasing. Examples of acid degreasing include a method using an inorganic acid such as sulfuric acid, nitric acid, hydrochloric acid, or hydrofluoric acid alone, or a mixed solution of such inorganic acids. In addition, as the acid degreasing, by using an acid degreasing agent in which a fluorine-containing compound such as monosodium ammonium bifluoride is dissolved in the inorganic acid mentioned above, particularly in a case where an aluminum foil is used as the metal foil layer 13, it is possible to not only obtain a degreasing effect of aluminum, but an aluminum fluoride compound, which is in passive state, can also be formed. Therefore, using an acid degreasing agent in which a fluorine-containing compound such as monosodium ammonium bifluoride is dissolved in the inorganic acid mentioned above as the acid degreasing is effective from the viewpoint of corrosion resistance. Examples of alkaline degreasing include a method using sodium hydroxide or the like.

Examples of hot water modification treatment include boehmite treatment in which an aluminum foil is immersed in boiling water to which triethanolamine has been added.

Examples of anodizing treatment include alumite treatment.

Examples of chemical conversion treatment include immersion-type chemical conversion treatment and coating-type chemical conversion treatment. Examples of immersion-type chemical conversion treatment include various chemical conversion treatments such as chromate treatment, zirconium treatment, titanium treatment, vanadium treatment, molybdenum treatment, calcium phosphate treatment, strontium hydroxide treatment, cerium treatment, ruthenium treatment, or a mixed phase thereof. On the other hand, examples of coating-type chemical conversion treatment include a method of applying a coating agent having corrosion-inhibiting performance onto the metal foil layer 13.

Among such corrosion-resistant treatments, when at least a portion of the anti-corrosion treatment layer is formed by any of a hot water modification treatment, an anodizing treatment, or a chemical conversion treatment, it is preferable to perform the degreasing treatment described above in advance. Note that when using a degreased metal foil such as a metal foil that has undergone an annealing process as the metal foil layer 13, it is not necessary to perform degreasing again in the formation of the anti-corrosion treatment layers 14a and 14b.

The coating agent used for the coating-type chemical conversion treatment preferably contains trivalent chromium. In addition, the coating agent may contain at least one type of polymer selected from the group consisting of cationic polymers and anionic polymers.

Furthermore, among the treatments described above, particularly in the hot water modification treatment and the anodizing treatment, the surface of the aluminum foil is dissolved by the treatment agent to form an aluminum compound (boehmite or alumite) having excellent corrosion resistance. Therefore, because a co-continuous structure is formed from the metal foil layer 13 using aluminum foil to the anti-corrosion treatment layers 14a and 14b, the above treatment is included in the definition of a chemical conversion treatment. On the other hand, as described later, it is also possible to form the anti-corrosion treatment layers 14a and 14b performing only a pure coating method that is not included in the definition of a chemical conversion treatment. Examples of such a method include a method using a sol of a rare earth element oxide such as cerium oxide with an average particle size of 100 nm or less as a material that has an aluminum corrosion-inhibiting effect (inhibitor effect) and is also favorable from an environmental standpoint. By using such a method, it is possible to impart a corrosion-inhibiting effect to a metal foil such as an aluminum foil even by a general coating method.

Examples of the sol of the rare earth element oxide include sols using various solvents such as a water-based solvent, an alcohol-based solvent, a hydrocarbon-based solvent, a ketonebased solvent, an ester-based solvent, and an ether-based solvent. Among such sols, a water-based sol (a sol using a water-based solvent) is preferable.

In the sol of the rare earth element oxide, an inorganic acid such as nitric acid, hydrochloric acid, or phosphoric acid, or a salt thereof, or an organic acid such as acetic acid, malic acid, ascorbic acid, or lactic acid is usually used as a dispersion stabilizer to stabilize the dispersion. Among such dispersion stabilizers, phosphoric acid in particular is expected to have the following effects and the like in the outer covering material 10. (1) Dispersion stabilization of the sol (2) Improvement of adhesion between the metal foil layer 13 and the anti-corrosion treatment layers 14a and 14b by utilizing the aluminum-chelating ability of phosphoric acid (3) Improvement of the cohesive force of the anti-corrosion treatment layers 14a and 14b (oxide layers) due to the ease of dehydration condensation of phosphoric acid even at low temperatures

Because the anti-corrosion treatment layers 14a and 14b formed by the rare earth element oxide sol are aggregates of inorganic particles, there is a concern that the cohesive force of the layers themselves will be low even after a drying and curing step. Therefore, the anti-corrosion treatment layers 14a and 14b in this case are preferably compounded with an anionic polymer or a cationic polymer to supplement the cohesive force.

The anti-corrosion treatment layers 14a and 14b are not limited to the layers described above. For example, the layers may be formed using a treatment agent in which phosphoric acid and a chromium compound are blended in a resin binder (such as aminophenol), as in a coating-type chromate of a known technique. If such a treatment agent is used, a layer having both a corrosion-inhibiting function and adhesion can be obtained. Furthermore, although it is necessary to consider the stability of the coating liquid, it is possible to obtain a layer having both a corrosion-inhibiting function and adhesion by using a coating agent in which a rare earth element oxide sol and a polycationic polymer or a polyanionic polymer are mixed to form a single liquid in advance.

The mass per unit area of the anti-corrosion treatment layers 14a and 14b, whether in a multilayer structure or a single-layer structure, is preferably 0.005 to 0.200 g/m², and more preferably 0.010 to 0.100 g/m². If the mass per unit area is 0.005 g/m² or more, it is easy to impart a corrosion-inhibiting function to the metal foil layer 13. Even if the mass per unit area exceeds 0.200 g/m², there is little change in the corrosion-inhibiting function. On the other hand, when a rare earth element oxide sol is used, if the coating film is thick, curing by heat during drying may be insufficient, and may be accompanied by a decrease in cohesive force. Note that the thickness of the anti-corrosion treatment layers 14a and 14b can be calculated from the specific gravity.

From the viewpoint of easily maintaining adhesion between the sealant layer 16 and the metal foil layer 13, the anti-corrosion treatment layers 14a and 14b may be in a form containing, for example, cerium oxide, 1 to 100 parts by mass of phosphoric acid or a phosphate salt with respect to 100 parts by mass of cerium oxide, and a cationic polymer, or may be formed by subjecting the metal foil layer 13 to a chemical conversion treatment, or may be formed by subjecting the metal foil layer 13 to a chemical conversion treatment and containing a cationic polymer.

### <Inner Adhesive Layer>

The inner adhesive layer 12b is a layer that adheres the metal foil layer 13 on which the second anti-corrosion treatment layer 14b is formed and the sealant layer 16. For the inner adhesive layer 12b, a general adhesive for adhering a metal foil layer and the sealant layer 16 can be used, and for example, the same adhesive as the outer adhesive layer 12a described above can be used.

The thickness of the inner adhesive layer 12b is not particularly limited, but from the viewpoint of obtaining the desired adhesive strength, processability, and the like, the thickness is preferably 1 to 10 µm, and more preferably 3 to 7 µm.

### <Sealant Layer>

The sealant layer 16 imparts sealing properties to the packaging material 10 by heat sealing.

Examples of the sealant layer 16 include a resin film including a base resin. Examples of the base resin include polyolefin-based resins and polyester-based resins. These resins may be used singly or in combination of two or more. Because polyolefin-based resins and polyester-based resins not only have excellent heat sealing properties, but also have a certain degree of flexibility, when the sealant layer 16 contains at least one of a polyolefin-based resin and a polyester-based resin, the outer covering material 10 is less likely to curl even if the sealant layer 16 is thicker than the base material layer 11. In particular, the sealant layer 16 preferably contains a polyolefin resin. In this case, not only are the heat sealing properties of the sealant layer 16 improved, but the moisture permeability is also more easily reduced, making it possible for the outer covering material 10 to have high heat sealing properties and barrier properties.

Examples of the polyolefin-based resin include low-density, medium-density, or high-density polyethylene, ethylene-α-olefin copolymers, homopolypropylene, block polypropylene, random polypropylene, and propylene-α-olefin copolymers. Among these, the polyolefin-based resin is preferably composed of at least one of homopolypropylene and block polypropylene. Homopolypropylene and block polypropylene are superior not only in terms of heat resistance but also in hardness compared to random polypropylene. For this reason, if the sealant layer 16 is composed of at least one of homopolypropylene and block polypropylene, the base material layer 11 can be made thicker or harder. As a result, it becomes possible for the outer covering material 10 to have excellent formability, and it is also possible to suppress curling of the outer covering material 10.

Examples of the polyester-based resin include polyethylene terephthalate (PET) resins, polybutylene terephthalate (PBT) resins, polyethylene naphthalate (PEN) resins, polybutylene naphthalate (PBN) resins, and copolymers thereof.

The sealant layer 16 may contain a polyolefin-based elastomer. The polyolefin-based elastomer may have compatibility with the base resin described above or may not have compatibility, but may also contain both a compatible polyolefin-based elastomer that has compatibility and an incompatible polyolefin-based elastomer that does not have compatibility. Having compatibility (compatible type) means being dispersed in a base resin with a dispersed phase size of 1 nm or more and less than 500 nm. Not having compatibility (non-compatible type) means being dispersed in a base resin with a dispersed phase size of 500 nm or more and less than 20 µm.

When the base resin is a polypropylene-based resin, examples of the compatible polyolefin-based elastomer include propylene-butene-1 random copolymers, and examples of the incompatible polyolefin-based elastomer include ethylene-butene-1 random copolymers. The polyolefin-based elastomer can be used singly or in combination of two or more types.

Furthermore, the sealant layer 16 may contain, as additives, for example, a slip agent, an antioxidant, a light stabilizer, a flame retardant, and the like. The content of the additives is preferably 5 parts by mass or less, where the total mass of the sealant layer 16 is 100 parts by mass.

The sealant layer 16 may also contain a lubricant as an additive.

The lubricant is not particularly limited, but preferable examples include amide-based lubricants and silicone oils. Specific examples of the amide-based lubricant include fatty acid amides such as saturated fatty acid amides and unsaturated fatty acid amides, and fatty acid bisamides such as saturated fatty acid bisamides and unsaturated fatty acid bisamides. Among these, fatty acid amides are preferable from the viewpoint of the film forming properties of the sealant layer 16.

Specific examples of saturated fatty acid amides include lauric acid amide, palmitic acid amide, and stearic acid amide. Specific examples of unsaturated fatty acid amides include oleic acid amide and erucic acid amide.

Specific examples of saturated fatty acid bisamides include methylene bisstearic acid amide, ethylene biscapric acid amide, ethylene bislauric acid amide, and ethylene bisstearic acid amide. Specific examples of unsaturated fatty acid bisamides include ethylene biserucic acid amide and ethylene bisoleic acid amide.

The boiling point of the lubricant is not particularly limited, but is preferably 180°C or higher. In this case, volatilization of the lubricant is suppressed even when the outer covering material 10 is placed in a high-temperature environment of 150°C or higher. Examples of such lubricants include the fatty acid amides and fatty acid bisamides mentioned above.

The lubricant may be used alone as a single type, or two or more types may be used in combination.

The content of the lubricant in the sealant layer 16 is not particularly limited as long as the amount enables the sealant layer 16 to absorb the lubricant from the lubricant layer 18 such that the amount of lubricant in the lubricant layer 18 is 10 mg/m² or less when the outer covering material 10 is placed in an environment at 40°C or higher, but the lower the content of the lubricant in the sealant layer 16, the more easily the sealant layer 16 absorbs the lubricant from the lubricant layer 18 when the outer covering material 10 is placed in an environment at 40°C or higher. Note that the amount of lubricant in the lubricant layer 18 when the outer covering material 10 is placed in an environment at 40°C or higher refers to the amount of lubricant in the lubricant layer 18 when the outer covering material 10 is placed in an environment at 40°C or higher for 2 weeks (336 hours).

The content of the lubricant in the sealant layer 16 may be 1,000 ppm by mass or less, 500 ppm by mass or less, or less than 200 ppm by mass, but the content is preferably less than 200 ppm by mass. In this case, when the outer covering material 10 is placed in an environment at 40°C or higher, the sealant layer 16 can effectively absorb the lubricant from the lubricant layer 18. For this reason, for example, after placing the outer covering material 10 in an environment at 40°C or higher, when a battery cell of a power storage device is placed between two outer covering materials 10 with the lubricant layer 18 facing the battery cell side, and the battery cell is pressurized via the outer covering materials 10, the static friction coefficient of the outer covering material 10 with respect to the battery cell becomes even larger, and slippage of the outer covering material 10 with respect to the battery cell can be more sufficiently suppressed.

The content of the lubricant in the sealant layer 16 is preferably 150 ppm by mass or less, more preferably 120 ppm by mass or less, still more preferably 100 ppm by mass or less, and particularly preferably 50 ppm by mass or less.

The content of the lubricant in the sealant layer 16 may be 0 ppm by mass, but from the viewpoint of processability, the content is preferably 10 ppm by mass or more, more preferably 20 ppm by mass or more, and particularly preferably 50 ppm by mass or more.

The surface roughness Sa of the surface of the sealant layer 16 on the lubricant layer 18 side is not particularly limited, and may be less than 1.5 µm or 1.0 µm or less, but is preferably 1.0 µm or less. The surface roughness Sa of the surface of the sealant layer 16 on the lubricant layer 18 side also affects the ease of sliding of the mold. When the surface roughness Sa of the surface of the sealant layer 16 on the lubricant layer 18 side of the thermally fusible resin layer is 1.0 µm or less, after the lubricant contained in the lubricant layer 18 is absorbed into the sealant layer 16, because the contact area between the outer covering material 10 and the battery cell can be increased, it is possible to make the outer covering material 10 less likely to slip with respect to the battery cell.

The surface roughness Sa of the surface of the sealant layer 16 on the lubricant layer 18 side is preferably less than 0.7 µm, more preferably 0.50 µm or less, and particularly preferably 0.30 µm or less.

The surface roughness Sa of the surface of the sealant layer 16 on the lubricant layer 18 side is preferably 0.12 µm or more, and more preferably 0.15 µm or more, from the viewpoint of formability.

The sealant layer 16 may be either a single-layer film or a multilayer film, and may be selected according to the required function. When the sealant layer 16 is a multilayer film, the layers may be laminated by co-extrusion or by dry lamination.

The thickness of the sealant layer 16 is not particularly limited, but from the viewpoint of achieving both a thinner film and improvement of heat seal strength in a high-temperature environment, the thickness is preferably in the range of 5 to 100 µm, more preferably in the range of 10 to 100 µm, and still more preferably in the range of 20 to 80 µm.

### <Lubricant Layer>

The lubricant layer 18 includes a lubricant.

The lubricant is not particularly limited, but preferable examples include amide-based lubricants and silicone oils. Specific examples of the amide-based lubricant include fatty acid amides such as saturated fatty acid amides and unsaturated fatty acid amides, and fatty acid bisamides such as saturated fatty acid bisamides and unsaturated fatty acid bisamides. Among these, fatty acid amides are preferable from the viewpoint of processability.

Specific examples of saturated fatty acid amides include lauric acid amide, palmitic acid amide, and stearic acid amide. Specific examples of unsaturated fatty acid amides include oleic acid amide and erucic acid amide.

Specific examples of saturated fatty acid bisamides include methylene bisstearic acid amide, ethylene biscapric acid amide, ethylene bislauric acid amide, and ethylene bisstearic acid amide. Specific examples of unsaturated fatty acid bisamides include ethylene biserucic acid amide and ethylene bisoleic acid amide.

The lubricant may be used alone as a single type, or two or more types may be used in combination.

The boiling point of the lubricant is not particularly limited, but is preferably 180°C or higher. In this case, volatilization of the lubricant is suppressed even when the outer covering material 10 is placed in a high-temperature environment of 150°C or higher. Examples of such lubricants include the fatty acid amides and fatty acid bisamides mentioned above.

The lubricant may be the same as, or different from, the lubricant contained in the sealant layer 16, but is preferably the same. The behavior of the lubricant in the lubricant layer 18 being absorbed into the sealant layer 16 or, conversely, bleeding out from the sealant layer 16 differs depending on the type of lubricant in the sealant layer 16, and if the lubricant in the lubricant layer 18 is the same as the lubricant contained in the sealant layer 16, it becomes easier to control the behavior.

The amount of lubricant in the lubricant layer 18 may be 10 mg/m² or less or more than 10 mg/m², but it is preferably more than 10 mg/m². As a result of the amount of lubricant in the lubricant layer 18 being more than 10 mg/m², when a recess portion is formed in the outer covering material 10 using a mold from the lubricant layer 18 side, the mold slides easily with respect to the lubricant layer 18, the static friction coefficient that the mold imparts to the outer covering material 10 is reduced, and ruptures and cracks are even less likely to occur in the outer covering material 10. The amount of lubricant in the lubricant layer 18 is appropriately adjusted so that the amount of lubricant in the lubricant layer 18 becomes 10 mg/m² or less when the outer covering material 10 is placed in an environment at 40°C or higher.

The amount of lubricant in the lubricant layer 18 is preferably 15 mg/m² or more, more preferably 20 mg/m² or more, and particularly preferably 25 mg/m² or more, from the viewpoint of formability.

The amount of lubricant in the lubricant layer 18 is preferably 40 mg/m² or less, and more preferably 30 mg/m² or less, from the viewpoint of suppressing slippage with respect to the battery cell after the forming process.

The lubricant layer 18 is preferably obtained by coating using a composition containing a lubricant.

Because the lubricant layer 18 is obtained by coating using a composition containing a lubricant, it is easy to control the amount of lubricant in the lubricant layer 18. For this reason, it becomes easier to adjust the amount of lubricant in the lubricant layer 18 to a constant amount greater than 10 mg/m² that exhibits excellent formability, and the formability is stabilized. In addition, because the lubricant layer 18 is obtained by coating using a composition containing a lubricant, it is possible to make the amount of lubricant in the lubricant layer 18 less than or equal to the amount of lubricant that can be absorbed into the sealant layer 16.

The static friction coefficient at 60°C on the surface of the lubricant layer 18 of the outer covering material 10 is not particularly limited, but is preferably 0.75 or more.

In this case, in a case where the battery cell of the power storage device is placed between two outer covering materials 10 with the lubricant layer 18 facing the battery cell side, and the battery cell is pressurized via the outer covering materials 10, when the power storage device is operated and the battery cell generates heat at 60°C or higher, the static friction coefficient of the outer covering material 10 with respect to the battery cell becomes even larger, and slippage of the outer covering material 10 with respect to the battery cell can be more sufficiently suppressed. For this reason, particularly when the battery cell becomes large and the mass of the battery cell itself increases, positional displacement of the battery cell with respect to the outer covering material 10 can be made less likely to occur.

The static friction coefficient at 60°C is more preferably 0.80 or more, and particularly preferably 0.85 or more.

The static friction coefficient at 60°C may be 1.3 or less.

The static friction coefficient is measured by an inclined plane method in accordance with JIS P 8147. Specifically, using a friction coefficient measuring device (product name: "AN-S2", manufactured by Toyo Seiki Ltd.), a laminated body of the outer covering material 10 and a sled (dimensions: 60 mm × 100 mm, mass: 1000 g) is placed on an inclined plate with the outer covering material 10 facing the inclined plate side, the inclined plate is inclined at a speed of 1.5 °/s, and the static friction coefficient is calculated from the maximum static frictional force and the normal force when the outer covering material 10 starts to slide.

The static friction coefficient at 23°C on the surface of the lubricant layer 18 of the outer covering material 10 is not particularly limited, but is preferably 0.4 or less. In this case, as a result of the static friction coefficient of the surface of the lubricant layer 18 of the outer covering material 10 at 23°C being 0.4 or less, when a recess portion is formed in the outer covering material 10 using a mold from the lubricant layer 18 side, the mold slides easily with respect to the lubricant layer 18, the static friction coefficient that the mold imparts to the outer covering material 10 is reduced, and ruptures and cracks are less likely to occur in the outer covering material 10. Therefore, the outer covering material 10 has even better formability.

The static friction coefficient at 23°C is more preferably 0.2 or less, and particularly preferably 0.15 or less.

The static friction coefficient at 23°C is more preferably 0.08 or more, and more preferably 0.09 or more. When the static friction coefficient at 23°C is 0.08 or more, the handling properties of the outer covering material 10 during the manufacturing of the power storage device are improved. That is, when the outer covering material 10 is transported by hand or machine before and after the formation of the outer covering material 10, the outer covering material 10 is less likely to slip and becomes easier to handle.

Although a preferred embodiment of the outer covering material for a power storage device of the present embodiment has been described in detail above, the present disclosure is not limited to such a specific embodiment, and various modifications and changes can be made within the scope of the present disclosure described in the claims.

For example, in Fig. 1, the outer covering material 10 is provided with the outer adhesive layer 12a and the inner adhesive layer 12b, but at least one of these layers may be omitted.

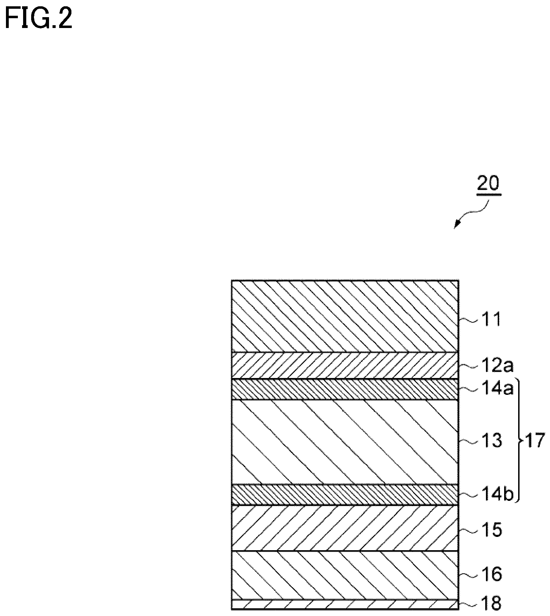

Further, Fig. 1 shows a case where the barrier layer 17 and the sealant layer 16 are laminated using the inner adhesive layer 12b, but the barrier layer 17 and the sealant layer 16 may be laminated using an adhesive resin layer 15 as in an outer covering material 20 for a power storage device shown in Fig. 2. In this case, the laminated body of the adhesive resin layer 15 and the sealant layer 16 constitutes a thermally fusible resin layer. In addition, in the outer covering material 20 for a power storage device shown in Fig. 2, an inner adhesive layer 12b may be further provided between the barrier layer 17 and the adhesive resin layer 15.

### <Adhesive Resin Layer>

The adhesive resin layer 15 is generally configured to include an adhesive resin composition as the main component and additives as necessary. The adhesive resin composition is not particularly limited, but preferably includes a modified polyolefin resin.

The modified polyolefin resin is preferably a polyolefin resin that has been graft-modified with an unsaturated carboxylic acid or an unsaturated carboxylic acid derivative derived from an acid anhydride or ester thereof.

Examples of the polyolefin resin include low-density polyethylene, medium-density polyethylene, high-density polyethylene, ethylene-α-olefin copolymers, homopolypropylene, block polypropylene, random polypropylene, and propylene-α-olefin copolymers.

The modified polyolefin resin is preferably a polyolefin resin modified with maleic anhydride. As the modified polyolefin resin, for example, "Admer" manufactured by Mitsui Chemicals Corporation, "Modic" manufactured by Mitsubishi Chemical Corporation, and the like, are suitable. Because such a modified polyolefin resin has excellent reactivity with various metals and polymers having various functional groups, adhesion can be imparted to the adhesive resin layer 15 by utilizing the reactivity. In addition, if necessary, the adhesive resin layer 15 may contain various additives such as various compatible and incompatible elastomers, flame retardants, slip agents, anti-blocking agents, antioxidants, light stabilizers, and tackifiers.

The thickness of the adhesive resin layer 15 is not particularly limited, but from the viewpoints of stress relaxation and moisture permeation, the thickness is preferably the same as or less than that of the sealant layer 16.

In the outer covering material 20 for a power storage device, the total thickness of the adhesive resin layer 15 and the sealant layer 16 is preferably in the range of 5 to 100 µm, and more preferably in the range of 20 to 80 µm, from the viewpoint of achieving both a thinner film and improvement of heat seal strength in a high-temperature environment.

### [Method of Manufacturing Outer Covering Material]

Next, an example of a method of manufacturing the outer covering material 10 shown in Fig. 1 will be described. The method of manufacturing the outer covering material 10 is not limited to the following method.

The method of manufacturing the outer covering material 10 of the present embodiment generally includes: a step of providing the anti-corrosion treatment layers 14a and 14b on the metal foil layer 13 and forming the barrier layer 17; a step of laminating the base material layer 11 and the barrier layer 17 using the outer adhesive layer 12a; a step of further laminating the sealant layer 16 via the inner adhesive layer 12b to produce a laminated body; a step of aging the obtained laminate as necessary; and a step of forming the lubricant layer 18 on the sealant layer 16 of the laminated body.

### (Barrier Layer Formation Step)

The present step is a step of forming the anti-corrosion treatment layers 14a and 14b on the metal foil layer 13, and forming the barrier layer 17. As mentioned above, examples of the method include subjecting the metal foil layer 13 to a degreasing treatment, a hot water modification treatment, an anodizing treatment, or a chemical conversion treatment, or applying a coating agent having corrosion-inhibiting performance.

When the anti-corrosion treatment layers 14a and 14b are multi-layered, for example, a coating liquid (coating agent) constituting the lower anti-corrosion treatment layer (on the metal foil layer 13 side) is applied to the metal foil layer 13 and baked to form a first layer, and then a coating liquid (coating agent) constituting the upper anti-corrosion treatment layer is applied to the first layer and baked to form a second layer.

The degreasing treatment may be performed by a spray method or an immersion method. The hot water modification treatment and the anodizing treatment may be performed by an immersion method. The chemical conversion treatment may be performed by appropriately selecting an immersion method, a spray method, a coating method, or the like, according to the type of chemical conversion treatment.

In terms of the coating method of the coating agent having corrosion-inhibiting performance, various methods such as gravure coating, reverse coating, roll coating, and bar coating can be used.

As described above, the various treatments may be performed on either both sides or one side of the metal foil, but in the case of one-side treatment, it is preferable to perform the treatment only on the side on which the sealant layer 16 is to be laminated. Note that, if required, the surface of the base material layer 11 may also be subjected to the above treatment.

The coating amounts of the coating agents for forming the first layer and the second layer are each preferably 0.005 to 0.200 g/m², and more preferably 0.010 to 0.100 g/m².

In addition, when drying and curing are necessary, the drying and curing can be performed in the range of 60 to 300°C as the temperature of the base material (metal foil 13), according to the drying conditions of the anti-corrosion treatment layers 14a and 14b to be used.

### (Lamination Step of Base Material layer and Barrier Layer)

The present step is a step of laminating the barrier layer 17 and the base material layer 11 via the outer adhesive layer 12a. As the lamination method, dry lamination, non-solvent lamination, wet lamination, or the like is used to laminate the two layers onto the material constituting the outer adhesive layer 12a described above. The outer adhesive layer 12a is provided, as a dry coating amount, in the range of 1 to 10 g/m², and more preferably in the range of 2 to 7 g/m².

Specific examples of the material constituting the outer adhesive layer 12a include polyurethane resins obtained by reacting a main agent such as a polyester polyol, a polyether polyol, an acrylic polyol, or a carbonate polyol with a bifunctional or higher isocyanate compound (polyfunctional isocyanate compound). At this time, it is preferable to use an aliphatic isocyanate compound as the polyfunctional isocyanate compound, and more preferable to use an alicyclic isocyanate compound. In this case, because the heat resistance of the outer adhesive layer 12a is further improved, it becomes possible for the base material layer 11 and the barrier layer 17 to maintain adhesion even at a high temperature of 120°C.

### (Lamination Step of Inner Adhesive Layer and Sealant Layer)

The present step is a step of laminating the sealant layer 16 on the second anti-corrosion treatment layer 14b side of the barrier layer 17 via the inner adhesive layer 12b. Examples of the lamination method include a wet process and dry lamination.

In the case of a wet process, a solution or dispersion of the adhesive constituting the inner adhesive layer 12b is applied onto the second anti-corrosion treatment layer 14b, the solvent is evaporated off at a predetermined temperature to dry and form a film, and after the dry film formation, a baking treatment is performed as necessary. Thereafter, the sealant layer 16 as a thermally fusible resin layer is laminated to manufacture the outer covering material 10. Examples of the coating method include various coating methods. The preferable dry coating amount of the inner adhesive layer 12b is the same as that of the outer adhesive layer 12a.

In this case, the sealant layer 16 can be manufactured by, for example, a melt extrusion molding machine using a sealant layer-forming resin composition containing the constituent components of the sealant layer 16 described above. In the melt extrusion molding machine, from the viewpoint of productivity, the processing speed can be 80 m/min or more.

At this time, the sealant layer 16 is formed so as to be capable of absorbing lubricant from the lubricant layer 18 when the outer covering material 10 is placed in an environment at 40°C or higher, such that the amount of lubricant in the lubricant layer 18 becomes 10 mg/m² or less.

### (Aging Treatment Step)

The present step is a step of subjecting the laminate to aging (curing) processing. As a result of aging the laminate, the adhesion between the metal foil layer 13 / second anti-corrosion treatment layer 14b / inner adhesive layer 12b / sealant layer 16 can be promoted. The aging treatment can be performed in the range of room temperature to 100°C. The aging time is, for example, 1 to 10 days.

### (Lubricant Layer Formation Step)

This present step is a step of forming the lubricant layer 18.

The lubricant layer 18 can be formed by preparing a composition including a lubricant and applying the composition to the surface of the sealant layer 16.

The lubricant layer 18 is formed in an amount that enables the lubricant to be absorbed from the lubricant layer 18 when the outer covering material 10 is placed in an environment at 40°C or higher, such that the amount of lubricant in the lubricant layer 18 becomes 10 mg/m² or less.

In this way, the outer covering material 10 of the present embodiment as shown in Fig. 1 can be manufactured.

Next, an example of a method of manufacturing the outer covering material 20 shown in Fig. 2 will be described. The method of manufacturing the outer covering material 20 is not limited to the following method.

The method of manufacturing the outer covering material 20 of the present embodiment generally includes: a step of providing the anti-corrosion treatment layers 14a and 14b on the metal foil layer 13 to form the barrier layer 17; a step of laminating the base material layer 11 and the barrier layer 17 using the outer adhesive layer 12a; a step of further laminating a thermally fusible resin layer including the adhesive resin layer 15 and the sealant layer 16 to produce a laminated body; a step of heat treating the obtained laminate as necessary; and a step of forming the lubricant layer 18 on the sealant layer 16. Note that the steps up to the step of laminating the base material layer 11 and the barrier layer 17, and the step of forming the lubricant layer 18 on the sealant layer 16 can be performed in the same manner as in the manufacturing method of the outer covering material 10 described above.

### (Lamination Step of Adhesive Resin Layer and Sealant Layer)

The present step is a step of forming the adhesive resin layer 15 and the sealant layer 16 on the second anti-corrosion treatment layer 14b formed in the previous step. Examples of the method include a method of sand lamination of the adhesive resin layer 15 together with the sealant layer 16 using an extrusion lamination machine. Furthermore, the adhesive resin layer 15 and the sealant layer 16 can also be laminated by a tandem lamination method or a co-extrusion method in which the adhesive resin layer 15 and the sealant layer 16 are extruded. In the formation of the adhesive resin layer 15 and the sealant layer 16, for example, each component is blended so as to satisfy the configurations of the adhesive resin layer 15 and the sealant layer 16 described above. In the formation of the sealant layer 16, the sealant layer-forming resin composition described above is used.

As a result of the present step, as shown in Fig. 2, a laminated body is obtained in which the layers are laminated in the order of the base material layer 11 / outer adhesive layer 12a / first anti-corrosion treatment layer 14a / metal foil layer 13 / second anti-corrosion treatment layer 14b / thermally fusible resin layer (adhesive resin layer 15 / sealant layer 16).

Note that the adhesive resin layer 15 may be laminated by directly extruding a material obtained by dry blending the constituent components using an extrusion lamination machine. Alternatively, the adhesive resin layer 15 may be laminated by extruding granulated pellets, which have been subjected to melt blending in advance using a melt-kneading device such as a single-screw extruder, a twin-screw extruder, or a Brabender mixer, using an extrusion lamination machine.

The sealant layer 16 may be laminated by directly extruding a material obtained by dry blending the constituent components of the sealant layer-forming resin composition using an extrusion lamination machine. Alternatively, the adhesive resin layer 15 and the sealant layer 16 may be laminated by a tandem lamination method or a co-extrusion method in which the adhesive resin layer 15 and the sealant layer 16 are extruded using granulated pellets that have been subjected to melt blending in advance using a melt-kneading device such as a single-screw extruder, a twin-screw extruder, or a Brabender mixer. The adhesive resin layer 15 and the sealant layer 16 may also be laminated by a method of forming a sealant single-layer film in advance as a cast film using the sealant layer-forming resin composition, and sand laminating the film together with the adhesive resin. The formation speed (processing speed) of the adhesive resin layer 15 and the sealant layer 16 can be, for example, 80 m/min or more from the viewpoint of productivity.

### (Heat Treatment Step)

The present step is a step of heat treating the laminate. As a result of heat treating the laminate, the adhesion between the metal foil layer 13 / second anti-corrosion treatment layer 14b / adhesive resin layer 15 / sealant layer 16 can be improved. As the heat treatment method, a method of performing treatment at a temperature higher than or equal to at least the melting point of the adhesive resin layer 15 is preferable.

In this way, the outer covering material 20 of the present embodiment as shown in Fig. 2 can be manufactured.

### [Power Storage Device]

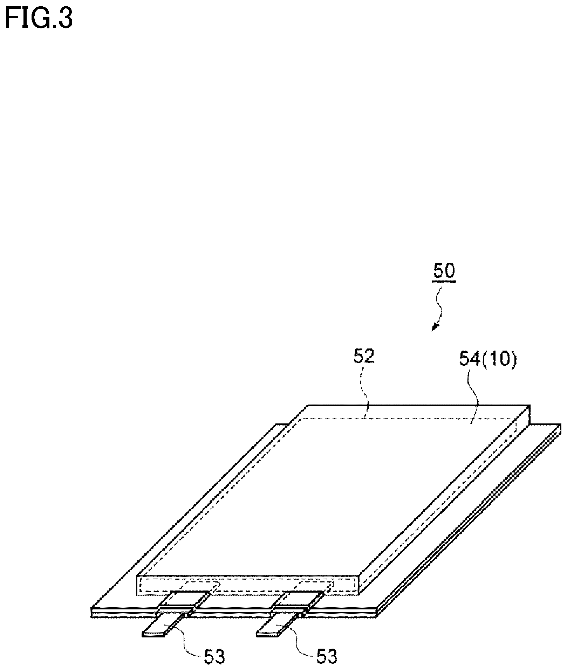

Next, an embodiment of a power storage device according to another aspect of the present disclosure will be described with reference to Fig. 3.

Fig. 3 is a perspective view showing an embodiment of a power storage device manufactured using the outer covering material described above. As shown in Fig. 3, a power storage device 50 comprises a battery cell 52 and an outer covering container 54 that accommodates the battery cell 52. The outer covering container 54 is obtained using the outer covering material 10 described above. In the outer covering material 10, the base material layer 11 is the outermost layer, and the sealant layer 16 is the innermost layer. The outer covering container 54 has a configuration in which the battery cell 52 is enclosed inside by folding one laminate film in half and then thermally fusing the laminate film, with the base material layer 11 on the outside of the power storage device 50 and the sealant layer 16 on the inside of the power storage device 50, or by stacking two laminate films and thermally fusing the laminate films. Note that the power storage device 50 may further include two metal terminals (current collecting terminals) 53 for drawing current from the battery cell 52 to the outside. In the power storage device 50, the outer covering container 54 may be formed using the outer covering material 20 instead of the outer covering material 10.

The battery cell 52 is formed by interposing an electrolyte between a positive electrode and a negative electrode.

The metal terminals 53 are formed by a part of a current collector being drawn out to the outside of the outer covering material 10, and are made of a metal foil such as a copper foil or an aluminum foil. Examples of the negative electrode include a silicon-based negative electrode and a carbon-based negative electrode. The power storage device of the present disclosure is particularly effective when the negative electrode is a silicon-based negative electrode. This is because a silicon-based negative electrode is said to increase in volume by 300 to 400% when Li is occluded during charging, making the outer covering material of the present disclosure more useful.

According to the power storage device 50 of the present embodiment, because the outer covering material 10 has excellent formability, ruptures, cracks, and the like are less likely to occur in the outer covering material 10. For this reason, the entry of moisture into the outer covering container 54 can be suppressed. Also, even if the battery cell 52 generates heat during operation of the power storage device 50 and the outer covering material 10 reaches a high temperature state at 40°C or higher, because the lubricant contained in the lubricant layer 18 is absorbed into the sealant layer 16, and the amount of lubricant in the lubricant layer 18 becomes 10 mg/m² or less, the static friction coefficient of the outer covering material 10 with respect to the battery cell 52 increases, and slippage of the outer covering material 10 with respect to the battery cell 52 can be suppressed.

The power storage device 50 of the present embodiment may be an all-solid-state battery. When the power storage device 50 is an all-solid-state battery, the power storage device 50 is used in a state where the battery cell 52 is pressurized via the outer covering material 10 of the outer covering container 54 in order to improve the performance. Here, in order to maintain the performance of the power storage device 50, it is desirable for slippage between the battery cell 52 and the outer covering material 10 to be suppressed even when the power storage device 50 is subjected to vibration. In this respect, because the power storage device 50 can suppress slippage of the outer covering material 10 with respect to the battery cell 52 even when subjected to vibration, the power storage device 50 is particularly useful when the device is an all-solid-state battery.

A solid electrolyte such as a sulfide-based solid electrolyte is used as the electrolyte of the battery cell 52.

The power storage device of the present disclosure may be, for example, a secondary battery such as a lithium-ion battery, a nickel-metal hydride battery, or a lead-acid battery, or an electrochemical capacitor such as an electric double-layer capacitor.

A summary of the present disclosure is as follows.
[1] An outer covering material for a power storage device comprising a base material layer, a barrier layer including a metal foil layer, and a thermally fusible resin layer in this order, wherein a surface of the thermally fusible resin layer is provided with a lubricant layer containing a lubricant, and in a case where the outer covering material for a power storage device is placed in an environment at 40°C or higher, the thermally fusible resin layer absorbs the lubricant from the lubricant layer such that an amount of lubricant in the lubricant layer becomes 10 mg/m² or less.
[2] The outer covering material for a power storage device according to [1], wherein the thermally fusible resin layer includes a sealant layer, and a content of a lubricant in the sealant layer is less than 200 ppm by mass.
[3] The outer covering material for a power storage device according to [1] or [2], wherein the thermally fusible resin layer includes a sealant layer, and the sealant layer contains a polyolefin resin.
[4] The outer covering material for a power storage device according to any one of [1] to [3], wherein the lubricant contained in the lubricant layer is a fatty acid amide.
[5] The outer covering material for a power storage device according to any one of [1] to [4], wherein the lubricant layer is obtained by coating using a composition containing the lubricant.
[6] The outer covering material for a power storage device according to any one of [1] to [5], wherein a surface roughness Sa of a surface of the thermally fusible resin layer on the lubricant layer side is 1.0 µm or less.
[7] The outer covering material for a power storage device according to any one of [1] to [6], further comprising an adhesive layer between the base material layer and the barrier layer.
[8] The outer covering material for a power storage device according to any one of [1] to [7], wherein a static friction coefficient of a surface the lubricant layer of the outer covering material at 60°C is 0.75 or more.
[9] The outer covering material for a power storage device according to any one of [1] to [8], wherein a static friction coefficient of a surface of the lubricant layer of the outer covering material at 23°C is 0.4 or less.
[10] The outer covering material for a power storage device according to any one of [1] to [9], wherein the power storage device is an all-solid-state battery.
[11] A power storage device, comprising: a battery cell; and an outer covering container that accommodates the battery cell, wherein the outer covering container is obtained using the outer covering material for a power storage device according to any one of [1] to [10].
[12] The power storage device according to [11], wherein the power storage device is an all-solid-state battery.

### Examples

Hereinafter, the present disclosure will be described more specifically by giving Examples and Comparative Examples, but the present disclosure is not limited to the following Examples.

### [Materials used]

The materials used in the Examples and Comparative Examples are shown below.

### <Base Material Layer>

As the base material layer, an easily-formable PET (manufactured by UNITIKA Ltd., thickness: 25 µm) was used.

### <Resin Composition for Forming First Adhesive Layer>

As the resin composition for forming the first adhesive layer, a polyester urethane-based adhesive was used, which was prepared by blending a polyester polyol (manufactured by Toyo-Morton, Ltd., product name: TMK-55) as a main agent and a TDI or IPDI-based isocyanate (manufactured by Toyo-Morton, Ltd., product name: CAT-RT1) as a curing agent, and diluting the mixture with a solvent.

### <Barrier Layer>

As the barrier layer, a layer was used which was formed by forming a first anti-corrosion treatment layer and a second anti-corrosion treatment layer on both sides of a metal foil layer.

### (Metal Foil Layer)

As the metal foil layer, a soft aluminum foil subjected to annealing and degreasing treatment (manufactured by Toyo Aluminium K.K., product name: 8079, thickness: 40 µm) was used.

### (Materials for Forming First Anti-Corrosion Treatment Layer (Base Material Layer Side) and Second Anti-Corrosion Treatment Layer (Sealant Layer Side))

As the materials for forming the first anti-corrosion treatment layer (base material layer side) and the second anti-corrosion treatment layer (sealant layer side), the following materials (CL-1) and (CL-2) were used.
(CL-1): "Sodium polyphosphate-stabilized cerium oxide sol" obtained by using distilled water as a solvent and adjusting the mixture such that the solid content concentration became 10% by mass.

Note that the sodium polyphosphate-stabilized cerium oxide sol was obtained by blending 10 parts by mass of a sodium salt of phosphoric acid with respect to 100 parts by mass of cerium oxide.
(CL-2): A composition consisting of 90% by mass of "polyallylamine (manufactured by Nitto Boseki Co., Ltd.)" and 10% by mass of "polyglycerol polyglycidyl ether (manufactured by Nagase ChemteX Corporation)", which was obtained by using distilled water as a solvent and adjusting the mixture such that the solid content concentration became 5% by mass.

### <Resin Composition for Forming Adhesive Resin Layer>

As the resin for forming the adhesive resin layer, an adhesive resin (an acid-modified polypropylene resin composition based on homopolypropylene (PP), manufactured by Mitsui Chemicals, Inc.) was prepared.

### <Resin Composition for Forming Sealant Layer>

Using a twin-screw extruder, a resin composition for forming a sealant layer containing block polypropylene (manufactured by SunAllomer Ltd., product name: PC684S) and a fatty acid amide as a lubricant was prepared by kneading such that the content of the lubricant became the value shown in Table 1. At this time, the unit of the lubricant content in the resin composition for forming the sealant layer is "ppm by mass".

### <Composition for Forming Lubricant Layer>

As the composition for forming the lubricant layer, a dispersion containing a fatty acid amide (product name: "Fatty Acid Amide E", manufactured by Kao Corporation) and a solvent including isopropyl alcohol was used. The content of the fatty acid amide in the dispersion was set to a concentration of 1.0% by mass to match the target coating amount.

### [Preparation of Outer Covering Material]

### (Examples 1 to 5 and Comparative Example 1)

First, a first anti-corrosion treatment layer and a second anti-corrosion treatment layer were provided on a metal foil layer by the following procedure to form a barrier layer. That is, on both surfaces of the metal foil layer, (CL-1) was firstly applied by microgravure coating such that the dry coating amount became 70 mg/m², and a baking treatment was performed at 200°C in a drying unit. Then, on the obtained layer, (CL-2) was applied by microgravure coating such that the dry coating amount became 20 mg/m². In this way, a composite layer consisting of (CL-1) and (CL-2) was formed on both surfaces of the metal foil layer as the first and second anti-corrosion treatment layers, to obtain a barrier layer. The composite layers exhibited corrosion-inhibiting performance as a result of compounding the two types of materials (CL-1) and (CL-2).

Then, the first anti-corrosion treatment layer side of the barrier layer was laminated to the base material layer using the resin composition for forming the first adhesive layer by a dry lamination method to obtain a laminate of the barrier layer and the base material layer (first laminate). Specifically, a polyurethane-based adhesive was applied onto the surface of the first anti-corrosion treatment layer side of the barrier layer so that the thickness after curing became 5 µm, dried at 80°C for 1 minute, and then laminated with the base material layer and aged at 60°C for 120 hours to obtain the first laminate.

Next, the first laminate was set in the unwinding section of an extrusion lamination machine, and the adhesive resin composition and the sealant layer-forming resin composition were co-extruded onto the second anti-corrosion treatment layer under processing conditions of 270°C and 100 m/min, thereby forming a thermally fusible resin layer including an adhesive resin layer and a sealant layer laminated in this order to a thickness of 80 µm, to obtain a second laminate. At this time, the content of the lubricant in the sealant layer was as shown in Table 1.

Then, a lubricant layer was formed by coating using the composition for forming the lubricant layer described above on the sealant layer of the thermally fusible resin layer of the second laminate such that the amount of lubricant in the lubricant layer after drying became 30 mg/m² as shown in Table 1.

As described above, an outer covering material (base material layer / first adhesive layer / barrier layer / thermally fusible resin layer (adhesive resin layer / sealant layer) / lubricant layer) in which the surface roughness Sa of the surface of the lubricant layer was the value shown in Table 1 was prepared.

### (Comparative Example 2)

An outer covering material (base material layer / first adhesive layer/barrier layer / thermally fusible resin layer (adhesive resin layer / sealant layer)) in which the surface roughness Sa of the surface of the sealant layer was the value shown in Table 1 was prepared in the same manner as in Example 1, except that the content of the lubricant in the sealant layer-forming resin composition was as shown in Table 1, and no lubricant layer was formed on the sealant layer.

### [Evaluation]

### <Formability>

For the outer covering materials prepared in the Examples and Comparative Examples, the forming limit at which deep-drawing forming is possible was determined by the following method, and the formability was evaluated based on the forming limit.

First, a rectangular portion of 120 mm in the TD direction × 200 mm in the MD direction was cut out as a test sheet from the outer covering materials obtained in the Examples and Comparative Examples.

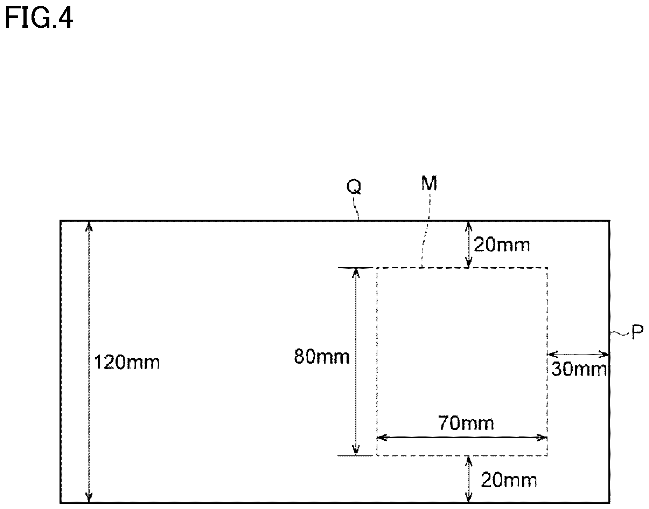

The test sheet was placed in a forming device such that the lubricant layer or sealant layer faced upward. Then, the forming depth of the forming apparatus was set from 3.0 to 8.0 mm in increments of 0.5 mm, and cold forming was performed in an environment of room temperature of 23°C and dew point temperature of -35°C. At this time, as the punch mold, a mold having a rectangular cross-section of 70 mm × 80 mm, a punch radius (RP) of 1.00 mm on the bottom surface, and a punch corner radius (RCP) of 1.00 mm on the side surface was used. As the die mold, one having a die radius (RD) of 1.00 mm on the upper surface of the opening was used. During forming, the test sheet was held down with a holding pressure (surface pressure) of 0.8 MPa, and forming was performed on a forming area (80 mm in the TD direction × 70 mm in the MD direction) within half the region of the test sheet (a region of 120 mm in the TD direction × 100 mm in the MD direction). The position of the forming area in the test sheet is as indicated by the dashed line in Fig. 4. As shown in Fig. 4, the forming area M is a position where the shortest distance to the short side P of the test sheet is 30 mm, and the shortest distance to the long side Q of the test sheet is 20 mm.

Then, the presence or absence of ruptures and pinholes in the pocket formed by the forming was confirmed visually while irradiating the test sheet with light, and the maximum value of the forming limit (forming depth) at which deep-drawing forming could be performed without any ruptures or pinholes was determined.

Then, the formability was evaluated based on the following evaluation criteria according to the forming limit. The results are shown in Table 1.

### (Evaluation Criteria)

Excellent : Forming limit is 5 mm or more
Good: Forming limit is 4.0 mm or more and less than 5.0 mm
Poor: Forming limit is less than 4.0 mm

### <Slippage suppression effect with respect to battery cell>

Two rectangular portions of 120 mm in the TD direction × 200 mm in the MD direction were cut out as a test sheet from the outer covering materials obtained in the Examples and Comparative Examples.

On the other hand, a Cu foil of long side 180 mm × short side 100 mm × thickness 2 mm, which is used for the negative electrode of a battery cell, was prepared.

Then, the Cu foil used in the battery cell was placed between the two test sheets, and the battery cell was pressurized with a force of 20 kg via the test sheets with two press plates made of SUS, to prepare a test specimen.

The test specimen was placed in a vibration testing machine (product name: "Generalpurpose Vibration Testing Machine", manufactured by IMV Corporation) while maintaining this state and then vibrated. Then, after the vibration test, the test specimen was visually confirmed to check whether the Cu foil had moved from the test sheet. Further, the slippage suppression effect of the test sheet with respect to the Cu foil was evaluated based on the following evaluation criteria. The results are shown in Table 1.

### (Evaluation Criteria)

Good: The position of the Cu foil did not shift with respect to the test sheet from before the test
Poor: The position of the Cu foil shifted with respect to the test sheet from before the test

### <Amount of Lubricant in Lubricant Layer After Storage at 40°C>

A rectangular portion of 120 mm in the TD direction × 200 mm in the MD direction was cut out as a test sheet from the outer covering materials obtained in the Examples and Comparative Examples.

Then, the test sheet was placed in an environment at 40°C and stored for 2 weeks (336 hours), and then the amount of lubricant in the lubricant layer was measured. The measurement of the amount of lubricant in the lubricant layer was performed as follows.

First, the lubricant layer of the test sheet was washed off with chloroform as a solvent for dissolving the lubricant, and the obtained liquid was subjected to GC-MS (gas chromatographymass spectrometry) analysis to measure the amount of lubricant in the liquid. Then, the amount of the lubricant was calculated based on the following formula. The results are shown in Table 1.
Amount of lubricant in lubricant layer (mg/m²) = 100 × measured amount of lubricant (mg) / surface area of lubricant layer of test sheet (m²)

**[Table 1]**

| | Thermally fusible resin layer | | | | Lubricant layer | Evaluation | | |
|---|---|---|---|---|---|---|---|---|
| | Sealant layer | | | Thickness | | Before storage in 40°C environment | After storage in 40°C environment | |
| | Material | Lubricant content | Surface roughness (Sa) | | Coating amount | Formability | Slippage suppression effect (with respect to battery cell) | Amount of lubricant in lubricant layer |
| | | ppm by mass | µm | µm | mg/m² | | | mg/m² |
| Example 1 | PP | 200 | 0.24 | 80 | 30 | Excellent | Good | 9.5 |
| Example 2 | PP | 100 | 0.24 | 80 | 30 | Excellent | Good | 5.2 |
| Example 3 | PP | 0 | 0.24 | 80 | 30 | Excellent | Good | 1.3 |
| Example 4 | PP | 0 | 0.97 | 80 | 30 | Excellent | Good | 1.3 |
| Example 5 | PP | 0 | 1.5 | 80 | 30 | Good | Good | 1.3 |
| Comparative Example 1 | PP | 300 | 0.24 | 80 | 30 | Excellent | Poor | 13.3 |
| Comparative Example 2 | PP | 5,000 | 0.24 | 80 | 0 | Poor | Poor | 15.1 |

From the results shown in Table 1, in Examples 1 to 5 and Comparative Example 1, where the coating amount of the lubricant layer was greater than 0 mg/m², the formability was Excellent or Good, whereas in Comparative Example 2, where the coating amount of the lubricant layer was 0 mg/m², the formability was Poor. Furthermore, in Examples 1 to 5, where the amount of lubricant in the lubricant layer after storage in a 40°C environment was 10 mg/m² or less, the slippage suppression effect with respect to the battery cell was Good, whereas in Comparative Examples 1 and 2, where the amount of lubricant in the lubricant layer after storage in a 40°C environment was greater than 10 mg/m², the slippage suppression effect with respect to the battery cell was Poor.

From the above, it was confirmed that, according to the outer covering material for a power storage device of the present disclosure, excellent formability can be obtained, and it is possible to suppress slippage with respect to a battery cell even when placed in an environment at 40°C or higher in a state where the battery cell of the power storage device is pressurized.

**[Reference Signs List]**

| | | | |
|---|---|---|---|
| 10, 20 | Outer covering material for power storage device, | | |
| 11 | Base material layer, | | |
| 12a | Outer adhesive layer, | 12b | Inner adhesive layer, |
| 13 | Metal foil layer, | 14a | First anti-corrosion treatment layer, |
| 14b | Second anti-corrosion treatment layer, | | |
| 15 | Adhesive resin layer (thermally fusible resin layer), | | |
| 16 | Sealant layer (thermally fusible resin layer), | | |
| 17 | Barrier layer, | | |
| 18 | Lubricant layer, | | |
| 50 | Power storage device, | | |
| 52 | Battery cell, | | |
| 53 | Metal terminal, | | |
| 54 | Outer covering container. | | |

## Claims

1. An outer covering material for a power storage device comprising a base material layer, a barrier layer including a metal foil layer, and a thermally fusible resin layer in this order, wherein
a surface of the thermally fusible resin layer is provided with a lubricant layer containing a lubricant, and
in a case where the outer covering material for a power storage device is placed in an environment at 40°C or higher, the thermally fusible resin layer absorbs the lubricant from the lubricant layer such that an amount of lubricant in the lubricant layer becomes 10 mg/m² or less.

2. The outer covering material for a power storage device according to claim 1, wherein
the thermally fusible resin layer includes a sealant layer, and a content of a lubricant in the sealant layer is less than 200 ppm by mass.

3. The outer covering material for a power storage device according to claim 1, wherein
the thermally fusible resin layer includes a sealant layer, and the sealant layer contains a polyolefin resin.

4. The outer covering material for a power storage device according to claim 1, wherein
the lubricant contained in the lubricant layer is a fatty acid amide.

5. The outer covering material for a power storage device according to claim 1, wherein
the lubricant layer is obtained by coating using a composition containing the lubricant.

6. The outer covering material for a power storage device according to claim 1, wherein
a surface roughness Sa of a surface of the thermally fusible resin layer on the lubricant layer side is 1.0 µm or less.

7. The outer covering material for a power storage device according to claim 1, further comprising
an adhesive layer between the base material layer and the barrier layer.

8. The outer covering material for a power storage device according to claim 1, wherein
a static friction coefficient of a surface the lubricant layer of the outer covering material at 60°C is 0.75 or more.

9. The outer covering material for a power storage device according to claim 1, wherein
a static friction coefficient of the lubricant layer of the outer covering material at 23°C is 0.4 or less.

10. The outer covering material for a power storage device according to claim 1, wherein
the power storage device is an all-solid-state battery.

11. A power storage device, comprising:
a battery cell; and
an outer covering container that accommodates the battery cell, wherein
the outer covering container is obtained using the outer covering material for a power storage device according to any one of claims 1 to 10.

12. The power storage device according to claim 11, wherein
the power storage device is an all-solid-state battery.
